# EUROPEAN PATENT SPECIFICATION

(11) **EP 4 316 860 B1**
(45) Date of publication and mention of the grant of the patent: **19.11.2025**
(21) Application number: 23189646.5
(22) Date of filing: 04.08.2023
(51) Int. Cl.: B41J 3/407, B41J 11/00, G06N 3/09

(54) **PRINTING SYSTEM**
DRUCKSYSTEM
SYSTÈME D'IMPRESSION

(30) Priority: 04.08.2022 JP 2022124590
(43) Date of publication of application: 07.02.2024
(73) Proprietor: Seiko Epson Corporation, Tokyo 160-8801 (JP)
(72) Inventor: TAKATSU, Naoki, Suwa-shi, 392-8502 (JP); MIYAZAWA, Hiromu, Suwa-shi, 392-8502 (JP); OZAWA, Kinya, Suwa-shi, 392-8502 (JP); IWAKAMI, Oshi, Suwa-shi, 392-8502 (JP)
(74) Representative: Lewis Silkin LLP

(56) References cited:
- US-A1- 2019 126 634
- US-A1- 2020 249 892
- US-A1- 2022 134 774

## Description

The present application is based on, and claims priority from JP Application Serial Number 2022-124590, filed August 4, 2022.

### BACKGROUND

### 1. Technical Field

The present disclosure relates to a printing system.

### 2. Related Art

JP-A-2022-73092 discloses a printing system including a first system that performs printing on a fabric and a second system that communicates with the first system. The second system acquires information related to the fabric from the first system. The second system outputs a recommended printing condition to the first system based on the acquired information.

Depending on the types of the fabric, the permeability of the printing liquid differs. When the permeability of the printing liquid to the fabric changes, blurring of the printing liquid easily occurs and the printing liquid is less set, resulting in change in image quality. As such, the printing system disclosed in JP-A-2022-73092 provides suitable printing conditions to the user in accordance with the types of the fabric to achieve the predetermined image quality. However, some operators may desire to select the printing liquid to achieve the predetermined image quality.

US 2019/126634 discloses an image processing apparatus which acquires information indicating the quality of fiber in cloth to be printed and image data to be printed on the cloth and generates a bleeding-prevented image indicating an ink application pattern in which at least one of an ink application position or an amount of ink applied is limited in anticipation of wetting and spreading of the ink in the cloth.

US 2020/249892 and US 2022/134774 both disclose printers that store models that ave been trained by machine

### SUMMARY

A printing system for solving the above-described problems includes at least one first system including a printing unit configured to eject a printing liquid onto a fabric to perform printing on the fabric, and an observation unit configured to observe the fabric to acquire observation data, and a second system configured to communicate with the at least one first system through a network, the second system including an acquiring unit configured to acquire pre-print observation data acquired by the observation unit observing the fabric before printing, a storage unit configured to store a model trained through machine learning, the model being configured to output a physical property parameter of a recommended liquid that is a printing liquid recommended for the fabric represented by the pre-print observation data when the pre-print observation data acquired by the acquiring unit is input, and an output unit configured to output, to the at least one first system, recommended data representing the physical property parameter output by the model.

### BRIEF DESCRIPTION OF THE DRAWINGS

FIG. 1 is a block diagram illustrating an embodiment of a printing system.
FIG. 2 is a flowchart illustrating an estimation process of estimating a recommended physical property parameter.

### DESCRIPTION OF EMBODIMENTS

An embodiment of a printing system is described below with reference to the drawings. The printing system is a system including an ink-jet printer that performs printing of images such as letters and photographs by ejecting an ink, which is an example of a printing liquid, to fabrics such as woven fabrics and knitted fabrics.

### Printing System

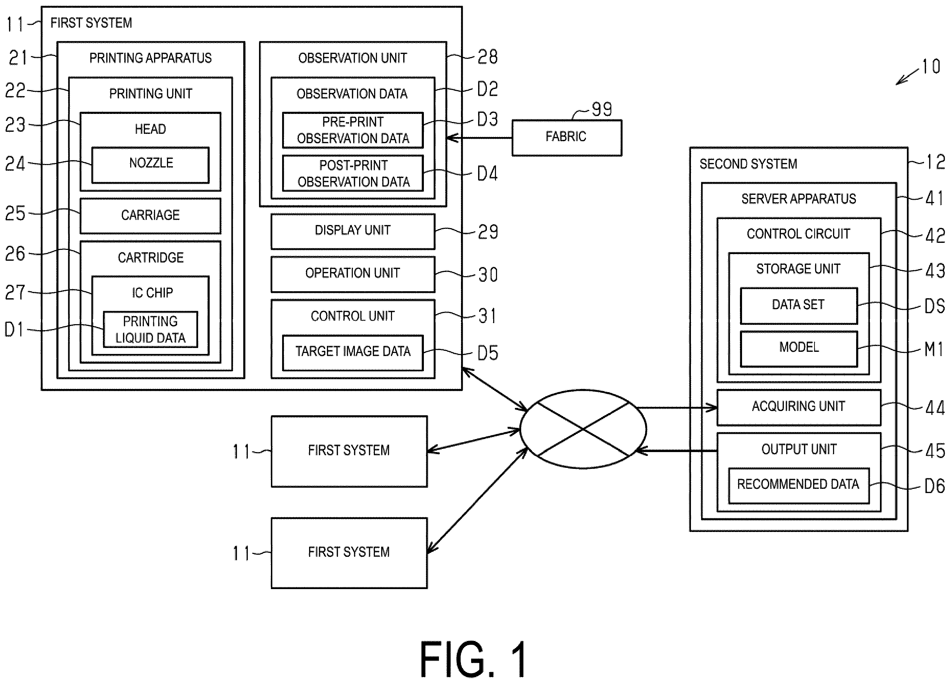

As illustrated in FIG. 1, a printing system 10 includes at least one first system 11 and one second system 12. The printing system 10 includes a plurality of first systems 11, and one second system 12. The printing system 10 is configured with at least one first system 11 and one second system 12 communicatively connected through a network.

### First System

The plurality of first systems 11 have a common configuration. Therefore, one first system 11 representing the plurality of first systems 11 is described below.

The first system 11 is a system that performs printing on a fabric 99. The first system 11 performs printing on the fabric 99 by performing textile printing on the fabric 99, for example. The first system 11 is owned by the user, for example. The plurality of first systems 11 is owned by a plurality of respective users. One user may own two or more first systems 11 of the plurality of first systems 11.

The first system 11 includes a printing apparatus 21. The printing apparatus 21 is an apparatus that performs printing on the fabric 99.
The printing apparatus 21 includes a printing unit 22. The printing unit 22 is configured to perform printing on the fabric 99 by ejecting a printing liquid. The printing unit 22 includes a head 23. The head 23 includes one or more nozzles 24. The head 23 ejects the printing liquid from the nozzle 24 to the fabric 99.

The printing unit 22 may include a carriage 25. The carriage 25 is equipped with the head 23. The carriage 25 performs scanning of the fabric 99. The printing apparatus 21 is a serial printer in which the head 23 together with the carriage 25 performs scanning of the fabric 99, for example. The printing apparatus 21 may be a line printer in which the head 23 can eject the printing liquid at the same time over the width of the fabric 99.

A cartridge 26 is mounted in the printing apparatus 21, for example. The cartridge 26 stores the printing liquid. The cartridge 26 is attachable to and detachable from the printing apparatus 21. The cartridge 26 is mounted to the printing unit 22, for example. With the cartridge 26 mounted to the printing apparatus 21, the printing liquid stored in the cartridge 26 is supplied to the head 23.

The cartridge 26 includes an IC chip 27. The IC chip 27 stores printing liquid data D1. The printing liquid data D1 is data related to the printing liquid. The IC chip 27 stores the printing liquid data D1 related to the printing liquid stored in the cartridge 26.

The printing liquid data D1 includes data representing the physical property parameter of the printing liquid. The physical property parameter of the printing liquid includes at least one of the viscosity of the printing liquid, the surface tension of the printing liquid, or the contact angle of the printing liquid with respect to the fabric 99. As the printing liquid data D1, the IC chip 27 stores the viscosity of the printing liquid, the surface tension of the printing liquid, and the contact angle of the printing liquid with respect to the fabric 99. The physical property parameter of the printing liquid affects the permeability of the printing liquid to the fabric 99. That is, the physical property parameter of the printing liquid affects the image quality of the image printed to the fabric 99.

The first system 11 includes an observation unit 28. The observation unit 28 acquires observation data D2 by observing the fabric 99. More specifically, the observation unit 28 generates an observation image by observing the fabric 99. The observation unit 28 acquires the observation image of the fabric 99 as the observation data D2. The observation data D2 is data related to the fabric 99. The observation image is electronic data of the fabric 99 as an image.

The observation unit 28 is an X ray CT inspection apparatus, for example. In this case, the observation unit 28 observes the fabric 99 by irradiating the fabric 99 with an X ray. As the observation data D2, the observation unit 28 acquires a CT image of the fabric 99. The observation unit 28 is not limited to an X ray CT inspection apparatus, but may be electron microscopes, optical microscopes, or digital cameras.

The observation data D2 includes pre-print observation data D3. The pre-print observation data D3 is data acquired by the observation unit 28 observing the fabric 99 before printing. The pre-print observation data D3 is obtained when the user causes the observation unit 28 to observe the fabric 99 before printing.

The observation data D2 includes post-print observation data D4. The post-print observation data D4 is data acquired by the observation unit 28 observing the fabric 99 after printing. The post-print observation data D4 is obtained when the user causes the observation unit 28 to observe the fabric 99 after printing.

The first system 11 includes a display unit 29. The display unit 29 is configured to display information. The display unit 29 displays information received from the second system 12, for example. The display unit 29 is a display, for example.

The first system 11 includes an operation unit 30. The operation unit 30 may be a pointing device, or a touch panel, for example. The user inputs data to the first system 11 and gives an instruction to the first system 11 by operating the operation unit 30.

The first system 11 includes a control unit 31. The control unit 31 controls the first system 11. The control unit 31 receives instructions from the user through the operation unit 30, and controls the first system 11 in accordance with the instruction, for example. The control unit 31 communicates with the second system 12. The control unit 31 exchanges data with the second system 12.

The control unit 31 may be provided inside the printing apparatus 21, or may be an independent apparatus separated from the printing apparatus 21. The control unit 31 may be a CPU provided in the printing apparatus 21, or a computer terminal connected to the printing apparatus 21, for example.

The control unit 31 may be one or more processors that execute various processes in accordance with a computer program. The control unit 31 may be composed of one or more dedicated hardware circuits such as application-specific integrated circuits for executing at least some of various processes. The control unit 31 may be composed of a circuit including a combination of a processor and a hardware circuit. The processor includes a CPU, and memories such as a RAM and a ROM. The memory stores program codes or commands configured to cause the CPU to execute processing. The memory, i.e., a computer readable medium includes all types of readable medium that are accessible from general-purpose or dedicated computers.

The control unit 31 acquires the printing liquid data D1. The control unit 31 acquires the printing liquid data D1 by reading the printing liquid data D1 from the IC chip 27, for example. The control unit 31 may acquire the printing liquid data D1 through the operation unit 30, for example. In this case, the user inputs information described on the cartridge 26, such as the model number of the cartridge 26, to the control unit 31 through the operation unit 30, for example. The control unit 31 may acquire the printing liquid data D1 by searching a database based on the input information, for example.

The control unit 31 acquires the observation data D2. The control unit 31 acquires the observation data D2 from the observation unit 28 each time the observation unit 28 generates an observation image, for example. The control unit 31 may perform image analyzation of the observation image. The control unit 31 may acquire the feature of the fabric 99 by performing image analyzation of the observation image obtained by observing the fabric 99 before printing. The control unit 31 analyzes a spectrum obtained by performing Fourier transform on the observation image, for example. In this manner, the control unit 31 performs image analyzation of the observation image. The feature of the fabric 99 is a feature representing the structure of the fabric 99, such as the yarn thickness, yarn density, weaving and knitting of the fabric 99, for example. The control unit 31 may acquire the feature of the fabric 99 as the observation data D2. Specifically, the observation data D2 is data representing the observation image of the fabric 99, information obtained based on that observation image, or both.

The control unit 31 may acquire the feature of the fabric 99, and an evaluation value representing the image quality of the image printed to the fabric 99 through the image analyzation of the observation image obtained by observing the fabric 99 after printing. The image quality is quantitatively evaluated with the evaluation value of the image quality. The image quality is blurring, sharpness, color, graininess, banding, gradation, and the like. As with the feature of the fabric 99, the evaluation value is obtained through the image analyzation of the observation image. In this case, the observation data D2 includes the evaluation value.

The control unit 31 includes target image data D5. The target image data D5 is electronic data of an image printed on the fabric 99. The control unit 31 acquires the target image data D5 from a terminal that communicates with the first system 11, a storage medium connected to the first system 11 and the like, for example. The control unit 31 prints the image represented by the acquired target image data D5 on the fabric 99.

The control unit 31 may acquire a change value representing change in image quality through image analyzation of the post-print observation data D4 and the target image data D5. The observation data D2 may include the change value. With the change value, the image quality is accurately evaluated regardless of the image printed to the fabric 99.

The control unit 31 transmits the printing liquid data D1 to the second system 12. Specifically, the control unit 31 transmits data including the physical property parameter of the printing liquid used for the printing to the second system 12. The control unit 31 transmits the observation data D2 to the second system 12. The control unit 31 transmits the pre-print observation data D3 to the second system 12. Specifically, the control unit 31 transmits data related to the fabric 99 to be printed, to the second system 12. The pre-print observation data D3 is used as input data in the second system 12. The control unit 31 transmits the post-print observation data D4. Specifically, the control unit 31 transmits data related to the fabric 99 after printing, to the second system 12. The control unit 31 may transmit the target image data D5 to the second system 12. Specifically, the control unit 31 may transmit data representing the target image to be printed, to the second system 12.

The control unit 31 transmits a plurality of pieces of data acquired along with the printing, to the second system 12 as data set DS. The data set DS is data in which the printing liquid data D1 and the post-print observation data D4 are associated with each other, for example. More specifically, the control unit 31 transmits, to the second system 12, data representing the physical property parameter of the printing liquid used for the printing, and data related to the fabric 99 after the printing with that the printing liquid in the state where they are associated with each other. The data set DS represents change in image quality regarding a combination of the fabric 99 and the printing liquid. For example, in the data set DS, the image quality is high when the fabric 99 and the printing liquid have good compatibility. The data set DS is used as teacher data in the second system 12.

The data set DS may include the target image data D5. Specifically, the control unit 31 may transmit, to the second system 12, the printing liquid data D1, the post-print observation data D4 and the target image data D5 in the state where they are associated with each other. More specifically, the control unit 31 may transmit, to the second system 12, data representing the physical property parameter of the printing liquid used for the printing, data related to the fabric 99 after the printing with that the printing liquid, and data representing the target image to be printed in the state where they are associated with each other.

The data set DS may include the pre-print observation data D3. Specifically, the control unit 31 may transmit, to the second system 12, the printing liquid data D1, the pre-print observation data D3 and the post-print observation data D4 in the state where they are associated with each other. More specifically, the control unit 31 may transmit, to the second system 12, data representing the physical property parameter of the printing liquid used for the printing, data related to the fabric 99 to be printed, and data related to the fabric 99 after the printing with that the printing liquid in the state where they are associated with each other. The control unit 31 may transmit, to the second system 12, the printing liquid data D1, the pre-print observation data D3, the post-print observation data D4 and the target image data D5 in the state where they are associated with each other.

### Second System

The second system 12 is a system that communicates with the first system 11. The second system 12 exchanges information with the first system 11. The second system 12 exchanges information with the plurality of first systems 11. The second system 12 is owned by a vendor.

The second system 12 includes a server apparatus 41. The server apparatus 41 communicates with the control unit 31.
The server apparatus 41 includes a control circuit 42. The control circuit 42 controls the second system 12. The control circuit 42 is a CPU, for example. As with the control unit 31, the control circuit 42 may be composed of one or more processors, one or more dedicated hardware circuits, or a circuit including a combination of a processor and a hardware circuit.

The control circuit 42 includes a storage unit 43. The storage unit 43 is a memory such as a RAM and a ROM, for example. The storage unit 43 stores data received from the first system 11. The storage unit 43 accumulates the data set DS received from the first system 11. The storage unit 43 stores the printing liquid data D1, the pre-print observation data D3, the post-print observation data D4, the target image data D5 and the like, for example. The storage unit 43 accumulates the data set DS received from each of the plurality of first systems 11. The accumulation of the data set DS constitutes big data.

The storage unit 43 stores a model M1 learned through machine learning. The model M1 is a model that estimates a printing liquid suitable for the fabric 99. When input data is input, the model M1 outputs a recommended printing liquid, i.e., data related to the recommended liquid. More specifically, when the pre-print observation data D3 is input, the model M1 outputs the physical property parameter of the printing liquid recommended for the fabric 99 represented by the pre-print observation data D3, i.e., the physical property parameter of the recommended liquid. More specifically, when the pre-print observation data D3 is input, the model M1 outputs the physical property parameter of the printing liquid estimated to achieve predetermined image quality or greater for the fabric 99 represented by the pre-print observation data D3. Specifically, the model M1 estimates that the predetermined image quality or greater is achieved when the printing liquid with the output physical property parameter is used for the fabric 99 represented by the pre-print observation data D3. As described above, the physical property parameter of the recommended liquid includes at least one of the viscosity of the recommended liquid, the surface tension of the recommended liquid, or the contact angle of the recommended liquid with respect to the fabric 99. Note that as a result of estimation, the printing liquid already prepared by the user of the first system 11 may or may not match the recommended printing liquid, i.e., the recommended liquid.

The model M1 is a model trained using the data set DS accumulated in the storage unit 43. The model M1 is constructed through machine learning of the control circuit 42 based on teacher data in which the printing liquid data D1 and the post-print observation data D4 are associated with each other, for example. The teacher data is composed of the data set DS. The output accuracy of the model M1 is improved by using, as teacher data, the data set DS accumulated by the plurality of first systems 11.

The teacher data may include the pre-print observation data D3 in addition to the printing liquid data D1 and the post-print observation data D4. In the pre-print observation data D3, the feature of the fabric 99 is more likely to be extracted than in the post-print observation data D4 because the printing liquid is not attached to the fabric 99. In particular, considering that the state of the fabric 99 may change due to the adhesion of the printing liquid, the feature of the fabric 99 is more accurately extracted by using the pre-print observation data D3. Thus, it is considerable that the learning accuracy of the model M1 is improved.

The teacher data may include the target image data D5 in addition to the printing liquid data D1 and the post-print observation data D4. In this case, the model M1 can learn the degree of change of the image quality of the target image and the image quality represented by the post-print observation data D4. In this case, the model M1 can output the physical property parameter of the recommended printing liquid such that the change in image quality with respect to the target image is small. For example, the model M1 can output the physical property parameter of the recommended printing liquid for achieving the image quality equivalent to the target image data D5. In addition, the teacher data may include an evaluation value, and may include a change value.

The model M1 is a regression model. The model M1 learns the condition of change in image quality for the combination of the feature of the fabric 99 and the physical property parameter of the printing liquid based on the teacher data. The method of learning is supervised learning with neural networks, so-called deep learning, for example.

The server apparatus 41 includes an acquiring unit 44. The acquiring unit 44 is an interface for acquiring information. The acquiring unit 44 acquires information from the first system 11. The acquiring unit 44 acquires the data set DS from the first system 11, for example. Specifically, the acquiring unit 44 acquires teacher data from the plurality of first systems 11. The acquiring unit 44 acquires the pre-print observation data D3 from the first system 11, for example. Specifically, the acquiring unit 44 acquires input data from the plurality of first systems 11.

The server apparatus 41 includes an output unit 45. The output unit 45 is an interface for outputting information. The output unit 45 outputs information to the first system 11, for example. The output unit 45 outputs recommended data D6 to the first system 11. The recommended data D6 is data related to the printing liquid output by the model M1. The recommended data D6 is data representing the physical property parameter of the printing liquid output by the model M1, i.e., the physical property parameter of the recommended liquid, for example. The output unit 45 outputs the recommended data D6 to the first system 11 that is the acquisition source of the input data input to the model M1 among the plurality of first systems 11. The recommended data D6 is displayed on the display unit 29. In this manner, the user of the first system 11 can select the printing liquid suitable for the fabric 99.

The recommended data D6 is not limited to the physical property parameter of the printing liquid output by the model M1, and may be information representing the model number, type and the like of the printing liquid with that physical property parameter. For example, the control circuit 42 may select the printing liquid with that physical property parameter based on the physical property parameter of the printing liquid output by the model M1. In this case, the control circuit 42 selects the printing liquid close to the physical property parameter of the printing liquid output by the model M1 by searching the database, for example. The output unit 45 may output, to the first system 11, the information representing the printing liquid selected by the control circuit 42 as the recommended data D6.

### Flowchart

Next, an estimation process of a method of estimating the printing liquid is described. The estimation process is executed at the printing system 10 before printing on the fabric 99 is executed at the first system 11. The estimation process is started at the time when the user causes the observation unit 28 to observe the fabric 99 to be printed, for example.

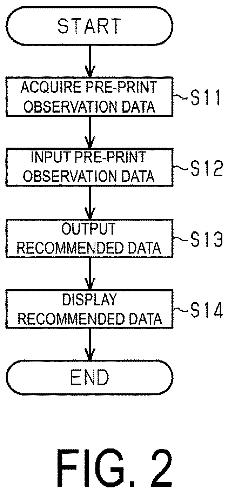

As illustrated in FIG. 2, at step S11, the acquiring unit 44 acquires the pre-print observation data D3 from the first system 11.
At step S12, the control circuit 42 inputs the pre-print observation data D3 to the model M1. In this manner, the recommended data D6 is obtained.

At step S13, the output unit 45 outputs the recommended data D6 to the first system 11.
At step S14, the display unit 29 displays the recommended data D6. By confirming the recommended data D6 displayed on the display unit 29, the user can select the printing liquid suitable for the fabric 99 to be printed.

Operations and Effects of Printing System
Next, operations and effects of the above-described embodiment are described.
(1) The second system 12 includes the storage unit 43 that stores the model M1 that is a model trained through machine learning. The model M1 outputs the physical property parameter of the recommended liquid that is the printing liquid recommended for the fabric 99 represented by the pre-print observation data D3 when the pre-print observation data D3 acquired by the acquiring unit 44 is input.

The pre-print observation data D3 includes information related to the fabric 99. Thus, with the above-described configuration, the physical property parameter of the recommended printing liquid, i.e., the physical property parameter of the recommended liquid, can be presented to the user when executing printing on the fabric 99 represented by the pre-print observation data D3 based on the pre-print observation data D3. In this manner, the user can select the printing liquid suitable for the fabric 99.

(2) The physical property parameter of the recommended liquid includes at least one of the viscosity of the recommended liquid, the surface tension of the recommended liquid, or the contact angle of the recommended liquid with respect to the fabric 99.
The viscosity of the recommended liquid, the surface tension, the contact angle with respect to the fabric 99 affect the permeability of the recommended liquid to the fabric 99. In view of this, with the above-described configuration, the user can perform suitable printing for the fabric 99 by selecting the printing liquid based on the physical property parameter of the recommended liquid presented by the second system 12.

(3) The acquiring unit 44 acquires the pre-print observation data D3 from each of the plurality of first systems 11. The output unit 45 outputs the data representing the physical property parameter of the printing liquid output by the model M1 to the first system 11 that is the acquisition source of the pre-print observation data D3 input to the model M1 among the plurality of first systems 11. With the above-described configuration, the printing system 10 can present the physical property parameter of the recommended printing liquid for the fabric 99 to each of the plurality of first systems 11.

(4) The first system 11 includes the display unit 29 that displays the recommended data D6.
With the above-described configuration, the user can select the printing liquid with the recommended physical property parameter by confirming the display unit 29.

### Variations

The above-described examples may be modified for implementation as follows. The above-described examples and the following variations may be combined with each other for implementation in so far as they are not technically inconsistent.

The model M1 may be constructed through machine learning with a training model using teacher data with a circuit different from the control circuit 42.
The control circuit 42 may perform image analyzation of an image included in the observation data D2 and the target image data D5. Specifically, the control circuit 42 may extract the feature of the fabric 99 or evaluate the image quality instead of the control unit 31.

The control unit 31 may select the printing liquid based on the physical property parameter of the printing liquid represented by the recommended data D6. In this case, the display unit 29 may display information representing the printing liquid selected by the control unit 31 as the recommended data D6.

### Technical Ideas

The following is a description of the technical ideas and their effects that can be understood from the examples and variations described above.

(A) A printing system includes at least one first system including a printing unit configured to eject a printing liquid onto a fabric to perform printing on the fabric, and an observation unit configured to observe the fabric to acquire observation data, and a second system configured to communicate with the at least one first system through a network, the second system including an acquiring unit configured to acquire pre-print observation data acquired by the observation unit observing the fabric before printing, a storage unit configured to store a model trained through machine learning, the model being configured to output a physical property parameter of a recommended liquid that is printing liquid recommended for the fabric represented by the pre-print observation data when the pre-print observation data acquired by the acquiring unit is input, and an output unit configured to output, to the at least one first system, recommended data representing the physical property parameter output by the model.

The pre-print observation data includes information related to the fabric. Accordingly, with the above-described configuration, the physical property parameter of the recommended printing liquid can be presented to the user when executing printing on the fabric represented by the pre-print observation data based on the pre-print observation data. In this manner, the user can select the printing liquid suitable for fabric.

(B) In the printing system, the physical property parameter may include at least one of viscosity of the recommended liquid, surface tension of the recommended liquid, or a contact angle of the recommended liquid with respect to the fabric.

The viscosity of the recommended liquid, the surface tension, and the contact angle with respect to the fabric affect the permeability of the printing liquid to the fabric. In view of this, with the above-described configuration, the user can perform the printing suitable for the fabric by selecting the printing liquid based on the physical property parameter of the recommended liquid presented by the second system.

(C) In the printing system, the at least one first system may be one of a plurality of the first systems, the acquiring unit may acquire the pre-print observation data from each of the plurality of first systems, and the output unit may output the recommended data output by the model to a first system, of the plurality of first systems, that is an acquisition source of the pre-print observation data input to the model. With the above-described configuration, the printing system can present the physical property parameter of the recommended printing liquid for the fabric to each of the plurality of first systems.

(D) In the printing system, the at least one first system may include a display unit configured to display the recommended data.
With the above-described configuration, the user can select the printing liquid with the recommended physical property parameter by confirming the display unit.

## Claims

1. A printing system (10) comprising:
at least one first system (11) including
a printing unit (21) configured to eject a printing liquid onto a fabric to perform printing on the fabric, and
an observation unit (28) configured to observe the fabric to acquire observation data; and
a second system (12) configured to communicate with the at least one first system through a network,
the second system including
an acquiring unit (44) configured to acquire pre-print observation data acquired by the observation unit observing the fabric before printing,
a storage unit (43) configured to store a model trained through machine learning, the model being configured to output a physical property parameter of a recommended liquid that is a printing liquid recommended for the fabric represented by the pre-print observation data, when the pre-print observation data acquired by the acquiring unit is input, and
an output unit (45) configured to output, to the at least one first system, recommended data representing the physical property parameter output by the model.

2. The printing system according to claim 1, wherein the physical property parameter includes at least one of viscosity of the recommended liquid, surface tension of the recommended liquid, or a contact angle of the recommended liquid with respect to the fabric.

3. The printing system according to claim 1, wherein
the at least one first system (11) is one of a plurality of the first systems,
the acquiring unit (44) acquires the pre-print observation data from each of the plurality of first systems, and
the output unit (45) outputs the recommended data to a first system, of the plurality of first systems, that is an acquisition source of the pre-print observation data input to the model, the recommended data being output by the model.

4. The printing system according to claim 1, wherein the at least one first system includes a display unit (29) configured to display the recommended data.

## Patentansprüche

1. Drucksystem (10), umfassend:
mindestens ein erstes System (11), enthaltend
eine Druckeinheit (21), die eingerichtet ist, eine Druckflüssigkeit auf einen Stoff auszustoßen, um Drucken auf dem Stoff durchzuführen, und
eine Beobachtungseinheit (28), die eingerichtet ist, den Stoff zu beobachten, um Beobachtungsdaten zu erlangen; und
ein zweites System (12), das eingerichtet ist, mit dem mindestens einen ersten System durch ein Netzwerk zu kommunizieren,
das zweite System enthaltend
eine Erlangungseinheit (44), die eingerichtet ist, Beobachtungsdaten vor Drucken zu erlangen, die von der Beobachtungseinheit, die den Stoff beobachtet, vor Drucken erlangt wurden,
eine Speichereinheit (43), die eingerichtet ist, ein Modell, das durch maschinelles Lernen trainiert ist, zu speichern, wobei das Modell eingerichtet ist, einen physikalischen Eigenschaftsparameter einer empfohlenen Flüssigkeit auszugeben, die eine Druckflüssigkeit ist, die für den Stoff empfohlen ist, der durch die Beobachtungsdaten vor Drucken dargestellt ist, wenn die Beobachtungsdaten vor Drucken, die von der Erlangungseinheit erlangt werden, eingegeben werden, und
eine Ausgabeeinheit (45), die eingerichtet ist, an das mindestens eine erste System empfohlene Daten auszugeben, die den physikalischen Eigenschaftsparameter darstellen, der von dem Modell ausgegeben wird.

2. Drucksystem nach Anspruch 1, wobei der physikalische Eigenschaftsparameter mindestens eines von Viskosität der empfohlenen Flüssigkeit, Oberflächenspannung der empfohlenen Flüssigkeit oder einen Kontaktwinkel der empfohlenen Flüssigkeit in Bezug auf den Stoff enthält.

3. Drucksystem nach Anspruch 1, wobei
das mindestens eine erste System (11) eines von mehreren ersten Systemen ist,
die Erlangungseinheit (44) die Beobachtungsdaten vor Drucken von jedem der mehreren ersten Systeme erlangt und
die Ausgabeeinheit (45) die empfohlenen Daten an ein erstes System der mehreren ersten Systeme ausgibt, das eine Erlangungsquelle der Beobachtungsdaten vor Drucken ist, die in das Modell eingegeben werden, wobei die empfohlenen Daten von dem Modell ausgegeben werden.

4. Drucksystem nach Anspruch 1, wobei das mindestens eine erste System eine Anzeigeeinheit (29) enthält, die eingerichtet ist, die empfohlenen Daten anzuzeigen.

## Revendications

1. Système d'impression (10) comprenant :
au moins un premier système (11) incluant
une unité d'impression (21) configurée pour éjecter un liquide d'impression sur un tissu pour réaliser une impression sur le tissu, et
une unité d'observation (28) configurée pour observer le tissu afin d'acquérir des données d'observation ; et
un deuxième système (12) configuré pour communiquer avec l'au moins un premier système par le biais d'un réseau,
le deuxième système incluant
une unité d'acquisition (44) configurée pour acquérir des données d'observation de préimpression acquises par l'unité d'observation observant le tissu avant l'impression,
une unité de stockage (43) configurée pour stocker un modèle entraîné par apprentissage machine, le modèle étant configuré pour fournir un paramètre de propriété physique d'un liquide recommandé, lequel est un liquide d'impression recommandé pour le tissu représenté par les données d'observation de préimpression, lorsque les données d'observation de préimpression acquises par l'unité d'acquisition sont entrées, et
une unité de sortie (45) configurée pour fournir, à l'au moins un premier système, des données recommandées représentant le paramètre de propriété physique fourni par le modèle.

2. Système d'impression selon la revendication 1, dans lequel le paramètre de propriété physique inclut l'un au moins parmi une viscosité du liquide recommandé, une tension de surface du liquide recommandé, ou un angle de contact du liquide recommandé par rapport au tissu.

3. Système d'impression selon la revendication 1, dans lequel
l'au moins un premier système (11) est l'un parmi une pluralité de premiers systèmes,
l'unité d'acquisition (44) acquiert les données d'observation de préimpression à partir de chacun parmi la pluralité de premiers systèmes, et
l'unité de sortie (45) fournit les données recommandées au premier système constituant, parmi la pluralité de premiers systèmes, une source d'acquisition des données d'observation de préimpression entrées dans le modèle, les données recommandées étant fournies par le modèle.

4. Système d'impression selon la revendication 1, dans lequel l'au moins un premier système inclut une unité d'affichage (29) configurée pour afficher les données recommandées.
